# EUROPEAN PATENT SPECIFICATION

(11) **EP 1 724 559 B1**
(45) Date of publication and mention of the grant of the patent: **09.07.2008**
(21) Application number: 06002448.6
(22) Date of filing: 07.02.2006
(51) Int. Cl.: G01F 23/296, G01F 1/66, G01F 15/00

(54) **Ultrasonic transducer for liquid metal**
Ultraschallwandler für Flüssigmetall
Transducteur à ultrasons pour métal liquide

(30) Priority: 17.05.2005 JP 2005144424
(43) Date of publication of application: 22.11.2006
(73) Proprietor: Japan Atomic Energy Agency, Tokai-mura, Naka-gun Ibaraki-ken (JP)
(72) Inventor: Hirabayashi, Masaru c/o Japan Atomic Energy Agency, Higashi-Ibariki-gun, Ibaraki-ken (JP); Ara, Kuniaki c/o Japan Atomic Energy Agency, Higashi-Ibariki-gun, Ibaraki-ken (JP)
(74) Representative: Klingseisen, Franz

(56) References cited:
- US-A- 3 989 965
- US-A- 4 196 631

## Description

### BACKGROUND OF THE INVENTION

The present invention relates to an ultrasonic transducer for sending and receiving ultrasonic waves into/from liquid heavy metal, and more particularly to an ultrasonic transducer for liquid metal capable of effectively sending ultrasonic waves into liquid heavy metal and effectively receiving ultrasonic waves transmitted in the liquid heavy metal by optimization of a material of a wetted portion thereof. This technology is useful for ultrasonic applied measurement of flow rate, flow velocity, liquid level, temperature, etc. of liquid heavy metal such as lead-bismuth and the like.

Measurement technology of flow rate, flow velocity, liquid level, temperature, etc. using ultrasonic waves is conventionally known. For example, Japanese Patent Laid-Open No. 4-309817 discloses an ultrasonic flow meter using an ultrasonic transducer which has a structure comprising a combination of an oscillator and a metallic diaphragm. In this prior art, it has been exemplified that FeNiCo alloy is used as the metallic diaphragm coming into contact with liquid.

US4196631 discloses an ultrasound transducer for use in liquids with high temperatures. The front face which is in contact with liquid is covered with thin layer of copper / Nickel based alloy.

US3989965 discloses an acoustic transducer for use in high temperature caustic sodium. To improve wetting and as a result the acoustic coupling, a one micron thick layer of gold is applied to the wetted surface.

A conventional ultrasonic transducer used for ultrasonic measurement in a liquid sodium-cooled fast reactor and the like has generally used austenitic stainless steel such as SUS304 or SUS316 as a wetted member coming into contact with liquid metal.

In recent years, it has been considered to use liquid heavy metal such as lead-bismuth as liquid metal coolant for a reactor. In this case, there is a problem of how a measurement system using ultrasonic waves should be developed as one of technologies for measuring heat transfer fluid behavior and plant process quantity (e.g. flow rate, flow velocity, liquid level, temperature and the like), which, however, has not yet become commercially practical. Such a prior art ultrasonic transducer as described above has difficulty in efficiently making ultrasonic waves enter liquid heavy metal such as lead or lead-bismuth. This is because a sound pressure transmission efficiency is low at a wetted interface between the ultrasonic transducer and the liquid heavy metal. In order to avoid such a problem, there has been employed a method of forcibly making ultrasonic waves enter the liquid heavy metal by increasing the sound pressure of the ultrasonic wave, which, however, has very low efficiency. Accordingly, it has been desired to develop measures for improving the sound pressure transmission efficiency of the wetted interface.

### SUMMARY OF THE INVENTION

In view of the aforementioned problems, it is an object of the present invention to provide an ultrasonic transducer capable of measuring flow rate, flow velocity, temperature, liquid level, etc. with ease and high precision by optimizing acoustic coupling in a wetted interface, thereby improving sound pressure transmission efficiency and facilitating entering of ultrasonic waves into liquid heavy metal such as lead-bismuth and the like.

According to the present invention, there is provided an ultrasonic transducer for liquid metal which comprises a combination of an ultrasonic oscillator and an oscillation transmission section and is capable of sending ultrasonic waves into liquid heavy metal through the oscillation transmission section and receiving ultrasonic waves transmitted in the liquid heavy metal, wherein at least a front end wetted portion coming into contact with the liquid heavy metal of the oscillation transmission section is made of ferritic stainless steel.

In the present invention, there is also provided an ultrasonic transducer for liquid metal which comprises a combination of an ultrasonic oscillator and an oscillation transmission section and is capable of sending ultrasonic waves into liquid heavy metal through the oscillation transmission section and receiving ultrasonic waves transmitted in the liquid heavy metal, wherein at least a front end wetted portion coming into contact with the liquid heavy metal of the oscillation transmission section is made of aluminum alloy steel having an aluminum content of 70% or more or copper alloy steel having a copper content of 50% or more.

In the simplest embodiment of the present invention, the whole of the oscillation transmission section is made of any of the ferritic stainless steel, the aluminum alloy and the copper alloy steel.
In another embodiment of the present invention, there may be employed a structure wherein the oscillation transmission section comprises a combined body of a wave guide member disposed in the proximity of the ultrasonic oscillator and a wetted member disposed on the front end side coming into contact with the liquid heavy metal, and the wetted member is made of any of the ferritic stainless steel, the aluminum alloy steel and the copper alloy steel. The liquid heavy metal intended for the ultrasonic transducer of the present invention includes lead-bismuth as well as a simple substance of lead or bismuth or the like.

In the ultrasonic transducer of the present invention, at least a front end wetted portion coming into contact with the liquid heavy metal of the oscillation transmission section is made of any of ferritic stainless steel, aluminum alloy steel having an aluminum content of 70% or more and copper alloy steel having a copper content of 50% or more, thereby being apt to transmit ultrasonic waves in the liquid heavy metal such as lead-bismuth immediately after the wetted portion is wetted with the liquid heavy metal and making the sound pressure transmission efficiency of the wetted interface higher. Accordingly, a received signal becomes larger, discrimination between an external disturbance and the received signal is facilitated and measurement precision is improved, thereby making the ultrasonic transducer applicable to a measurement system (a flow meter, a liquid level meter, thermometer, etc.) using ultrasonic waves in a system in which liquid heavy metal such as lead-bismuth is employed as a medium.

Even in the case where a material of the wetted portion is austenitic stainless steel, the transmission efficiency of ultrasonic sound pressure is somewhat improved if the time for wetting with liquid heavy metal becomes longer. However, in case of application to a measurement system, in order to obtain ultrasonic sound pressure required for measurement, long-term wetting with the liquid heavy metal is essential. In contrast, according to the present invention, use of the ferritic stainless steel, the aluminum alloy steel or the copper alloy steel as the material of the wetted portion can increase ultrasonic sound pressure in a relatively short time, so that the time required for measurement can be decreased, thus making the present invention very effective.

### BRIEF DESCRIPTION OF THE DRAWINGS

FIG. 1 is an explanatory view illustrating an embodiment of the ultrasonic transducer according to the present invention.

FIGS. 2A and 2B are explanatory views illustrating other embodiments of the ultrasonic transducer according to the present invention.

FIG. 3 is an explanatory view illustrating an outline of an apparatus for testing performance of the ultrasonic transducer.

FIGS. 4A to 4D are graphs illustrating examples of test results.

FIG. 5 is an explanatory view illustrating an example of application of the ultrasonic transducer to a liquid level measurement system.

FIG. 6 is an explanatory view illustrating an example of application of the ultrasonic transducer to a temperature measurement system.

FIG. 7 is an explanatory view illustrating an example of application of the ultrasonic transducer to a flow velocity measurement system.

FIG. 8 is an explanatory view illustrating an example of application of the ultrasonic transducer to a flow velocity measurement system.

### PREFERRED EMBODIMENTS OF THE INVENTION

Inventors of the present invention repeated various experiments on acoustic coupling of ultrasonic waves using lead-bismuth as the liquid heavy metal. As a result, the inventors grasped that the factors of governing sound transmission on the wetted interface includes a difference in ingredients in the wetted material and dissolution of other elements (dissolution of a particular ingredient in the wetted material into liquid heavy metal or the like), and found that ferritic stainless steel provides significantly better acoustic coupling with lead-bismuth (the so-called "acoustic wetting property" , which means that sound transmits with high efficiency on the interface) than austenitic stainless steel and that sound transmits well by establishing conditions on the wetted interface in which aluminum or copper having relatively high solubility in lead-bismuth always dissolves in the liquid heavy metal. The present invention has been accomplished based on recognition of such phenomena.

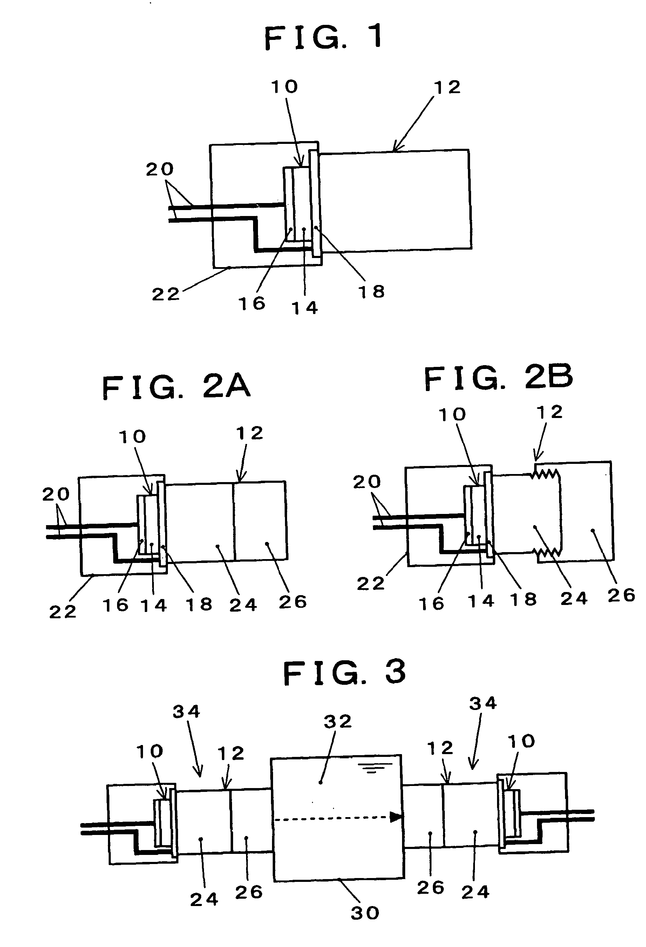

In the present invention, the liquid heavy metal as a medium for transmitting ultrasonic waves includes the lead-bismuth described above. For the reason of the above-described better sound pressure transmission, the present invention is effective for the medium such as a simple substance of lead or bismuth or the like. As the ferritic stainless steel, 2-1/4 Cr steel, 9 Cr steel, 12 Cr steel or the like, for example, may be used. In the case of utilizing a dissolution effect, aluminum alloy steel (alloy designation in JIS: A1050P, A5052P, A5083P or the like) having an aluminum content of 70% or more or copper alloy steel (brass, etc.) having a copper content of 50% or more may be used. If the content of aluminum or copper are lower than the above-defined value, an adverse effect occurs on material characteristics as alloy and the sound transmission characteristics becomes unsatisfactory. FIGS. 1 and 2 illustrate an ultrasonic transducer embodied on the basis of the above-described knowledge.

FIG. 1 is an explanatory view illustrating an embodiment of the ultrasonic transducer according to the present invention. The ultrasonic transducer is provided with a combination of an ultrasonic oscillator 10 and an oscillation transmission section 12, and is capable of sending ultrasonic waves into liquid heavy metal through the oscillation transmission section 12 and receiving ultrasonic waves transmitted in the liquid heavy metal. The ultrasonic oscillator 10 comprises a piezoelectric element 14 and electrodes 16, 18 disposed on both faces of the piezoelectric element 14, and each of the electrodes 16, 18 is attached with a lead wire 20. To protect the ultrasonic oscillator 10 and a fitting portion of the lead wire, these are covered with a protective case 22. In this embodiment as shown in FIG. 1, the whole of the oscillation transmission section 12 is made of any of ferritic stainless steel, aluminum alloy steel having an aluminum content of 70% or more or copper alloy steel having a copper content of 50% or more. A sectional shape of the oscillation transmission section is generally circular, however, may be of any shape such as a rectangle. A thickness (length) of the oscillation transmission section may be arbitrary. The present invention is also applicable to an ultrasonic transducer provided with an oscillation transmission section of a diaphragm structure having a very small thickness.

FIGS. 2A and 2B are explanatory views illustrating other embodiments of the ultrasonic transducer according to the present invention. The ultrasonic transducer is provided with a combination of an ultrasonic oscillator 10 and an oscillation transmission section 12, and is capable of sending ultrasonic waves into liquid heavy metal through the oscillation transmission section 12 and receiving ultrasonic waves transmitted in the liquid heavy metal. The ultrasonic oscillator 10 comprises a piezoelectric element 14 and electrodes 16, 18 disposed on both faces of the piezoelectric element 14, and each of the electrodes 16, 18 is attached with a lead wire 20. To protect the ultrasonic oscillator 10 and a fitting portion of the lead wire, these are covered with a protective case 22. In these embodiments, the oscillation transmission section 12 comprises a combined body of a wave guide member 24 disposed in the proximity of the ultrasonic oscillator and a wetted member 26 disposed on the front end side coming into contact with the liquid heavy metal. FIG.2A is a view illustrating an embodiment of the wave guide member 24 fixed with the wetted member 26, and FIG. 2B is an embodiment in which the wave guide member 24 is coupled to the wetted member 26 by screwing. The wave guide member 24 is made of, for example, austenitic stainless steel and the wetted member 26 is made of any of ferritic stainless steel, aluminum alloy steel having an aluminum content of 70% or more and copper alloy steel having a copper content of 50% or more. Since the sound pressure transmission behavior on a wetted interface is controlled by a very thin layer on the wetted interface (surface), the wetted member may be of a membrane structure formed by plating, vacuum deposition or the like.

By applying voltage between the lead wires 20, 22, the ultrasonic oscillator 10 is driven and ultrasonic waves are transmitted to the oscillation transmission section 12. The ultrasonic waves are transmitted into the liquid heavy metal from a front endwetted portion of the oscillation transmission section 12. On the other hand, the ultrasonic waves transmitted in the liquid heavy metal are received by the ultrasonic oscillator 10 through the oscillation transmission section 12 and taken out from the lead wires as an electric signal.

### EXAMPLE

FIG. 3 illustrates an outline of a test apparatus used to confirm the effectiveness of the present invention. Liquid heavy metal (lead-bismuth) 32 is put in a container 30 and, on both ends thereof, the ultrasonic transducer 34 is attached. The ultrasonic transducer 34 comprises a combined body of the wave guide member 24 disposed in the proximity of the ultrasonic oscillator and the wetted member 26 disposed on the front end side coming into contact with the liquid heavy metal, as shown in FIG. 2A. The container 30 has a structure in which the wetted member 26 comes into direct contact with liquid heavy metal. The wave guide member 24 and the wetted member 26 are coupled to each other with a liquid acoustic coupler for high temperature (an agent to be applied to an interface between solids to improve the transmission efficiency of ultrasonic waves: water glass is used in this example). The ultrasonic transducer on one side (left-hand side in FIG. 3) is used for sending ultrasonic waves and the ultrasonic transducer on the other side (right-hand side in FIG. 3) is used for receiving ultrasonic waves. An arrow by dashed lines indicates a transmission direction of ultrasonic waves.

In the test, 20 mm was taken as a distance between the wetted members of both the ultrasonic transducers 34 (namely, a transmission distance in lead-bismuth). The ultrasonic transducer used was 10 mm in diameter of the oscillator, 16 mm in diameter of the oscillation transmission section and 70 mm in length of the wetted member. Transmission frequency is approx. 4 MHz, and a material of the wetted member was changed for testing. Prior to the testing, the container 30 was preheated to approx. 300°C with a hot plate (not illustrated) and the lead-bismuth previously melted at 300°C was charged into the container. The control of lead-bismuth temperature was carried out by temperature measurement using a thermocouple and the output control of the hot plate. The ultrasonic waves emitted from the ultrasonic transducer for sending are transmitted in the lead-bismuth. A signal received by the ultrasonic transducer for receiving was observed and recorded with a digital oscilloscope. The time necessary for the wetted member to wet with the lead-bismuth was approx. 10 hours and measurement of received signals was carried out at intervals of approx. one hour. The lead-bismuth temperature is approx. 400°C. To check the effect of flow, the lead-bismuth was agitated with a rod of stainless steel at intervals of two to three hours. To prevent oxidation of the lead-bismuth, the test was carried out within a glove box in which oxygen concentration had been controlled to approx. 1 ppm.

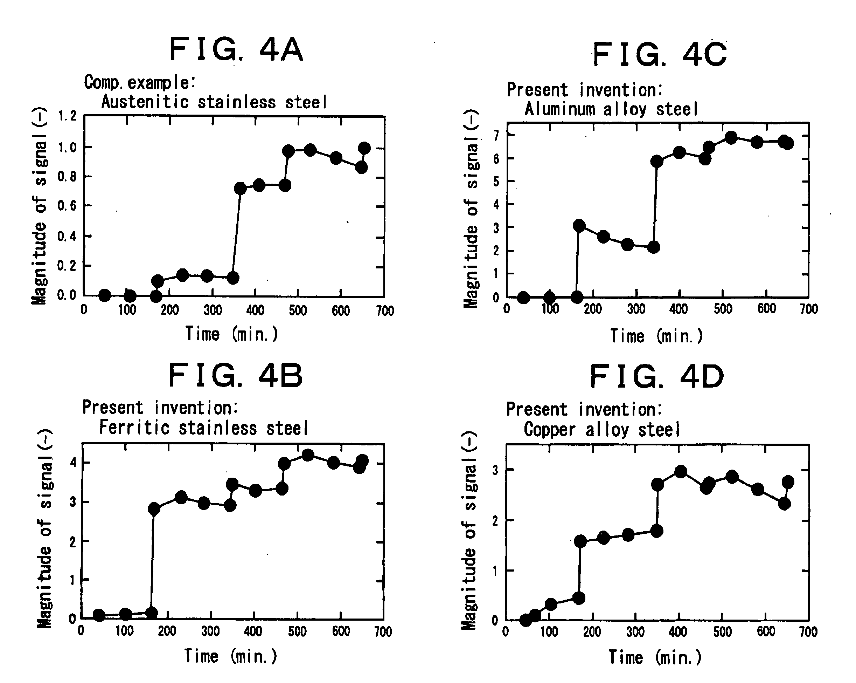

The measurement results obtained are shown in FIGS. 4A to 4D. FIG. 4A shows a graph of comparative example in which conventional austenitic stainless steel is used as the wetted member for comparison with the present invention. The abscissa of the graph shows a wetting time with lead-bismuth and the ordinate of the graph shows a magnitude of a transmission signal. The magnitude of signal is standardized by performing division by a magnitude of signal obtained after 10-hour wetting. FIGS.4B to 4D show graphs obtained by the present invention. Namely, 12Cr steel as ferritic stainless steel is used in FIG. 4B, aluminum as aluminum alloy steel is used in FIG. 4C, and brass as copper alloy steel is used in FIG. 4D, respectively, as the wetted member. In any case, the magnitude of signal is standardized by performing division by a magnitude of signal obtained after 10-hour wetting in the comparative example using austenitic stainless steel.

From the results as shown in these graphs which are obtained during wetting for several hours, it can be understood that the present invention has a larger magnitude of signal than the comparative example using austenitic stainless steel shown in FIG.4A (approx. 4 times for the case using ferritic stainless steel shown in FIG. 4B; approx. 7 times for the case using aluminum alloy steel shown in FIG. 4C; and approx. 3 times for the case using copper alloy steel shown in FIG. 4D). These results indicate that the materials of the wetted member of the ultrasonic transducer according to the present invention transmit ultrasonic sound pressure from the wetted member into the lead-bismuth with higher efficiency than the case using austenitic stainless steel. Accordingly, in applications of the present invention to measurement systems of various types using ultrasonic waves, higher transmission efficiency of ultrasonic sound pressure can be obtained, which means that discrimination between an external disturbance and a received signal is easy to conduct, thereby achieving high measurement precision.

In any case as shown in these graphs, a magnitude of signal is small during shorter wetting time and becomes larger after some period elapses. This is because a trace quantity of oxides or impurities exist on the surface of the wetted member material before wetting, and it takes much time to reduce or remove them in dependence on temperature conditions in the liquid heavy metal. Therefore, once wetting has been performed, even after liquid heavy metal is removed, the surface of the wetted member material can be maintained in the same condition as it is wetted by holding it in an inert atmosphere or the like, and thus, at the next wetting, a significantly large signal can instantaneously be obtained. In the present invention, any of the ferritic stainless steel, the aluminum alloy steel and the copper alloy steel used as the wetted member material allows fast upward behaviors of sound pressure transmission and large sound pressure, and therefore application of the present invention to the measurement system is effective.

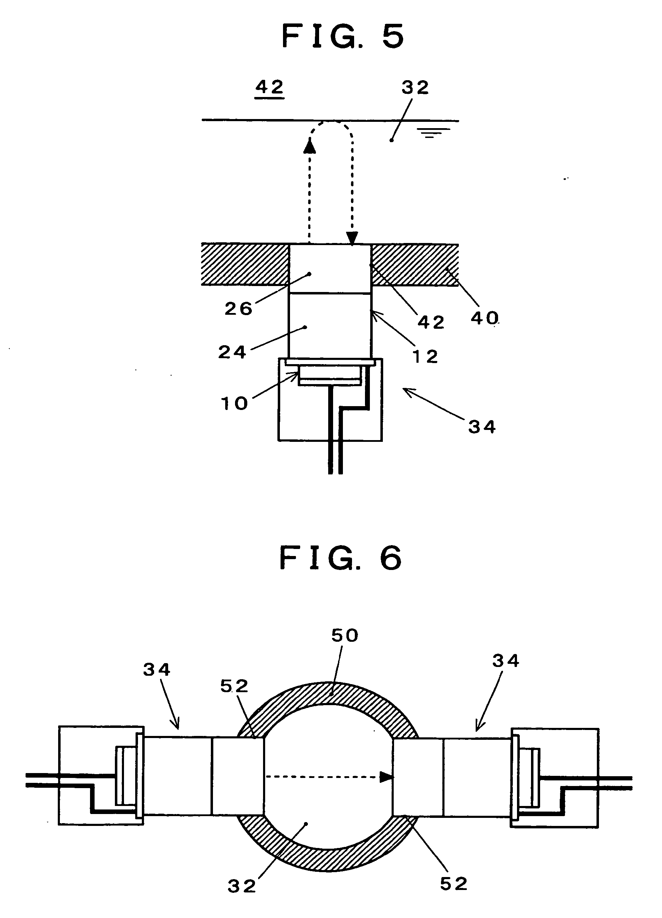

FIG. 5 illustrates an example of application of the present invention to a liquid level measurement system for lead-bismuth. A through hole 42 is formed in part of a structural member 40, and the front end wetted member 26 of the ultrasonic transducer 34 is inserted into the through hole 42. Liquid metal lead-bismuth 32 exists above the front end wetted member 26. The liquid metal lead-bismuth 32 may be stationary or flowing. When ultrasonic waves are emitted from the ultrasonic transducer 34, the ultrasonic waves are transmitted in the liquid metal lead-bismuth 32, reflected at an interface of the liquid metal and a gas space 42 and returned to the ultrasonic transducer 34 again. A transmission path of ultrasonic waves is indicated by an arrow of dotted lines. Since a sound velocity in the liquid metal lead-bismuth 32 is known, a liquid level (thickness) of the liquid metal lead-bismuth 32 can be measured by measuring the length of time from emission of ultrasonic waves to return thereof to the ultrasonic transducer again.

FIG. 6 illustrates an example of application of the present invention to a temperature measurement system for lead-bismuth. Throughholes 52 are formed at positions facing each other of a structural member 50 such as a container, pipe or the like, and a pair of ultrasonic transducers 34 are inserted into the through holes 52, respectively, so as to face the ultrasonic transducers with each other. Liquid metal lead-bismuth 32 exist inside the structural member 50. The liquid metal lead-bismuth 32 may be stationary or flowing. When ultrasonic waves are emitted from one of the ultrasonic transducers 34, the ultrasonic waves are transmitted in the liquid metal lead-bismuth 32 and received by the other ultrasonic transducer 34. A sound velocity in the liquid metal lead-bismuth 32 changes with temperature. When the distance between the ultrasonic transducers is known, the change in the sound velocity in the liquid metal lead-bismuth can be measured by measuring the length of time from emission of ultrasonic waves from the ultrasonic transducer to reception thereof by the other ultrasonic transducer. Therefore, from the change in the sound velocity in the liquid metal lead-bismuth thus obtained, the temperature of liquid metal lead-bismuth can be measured.

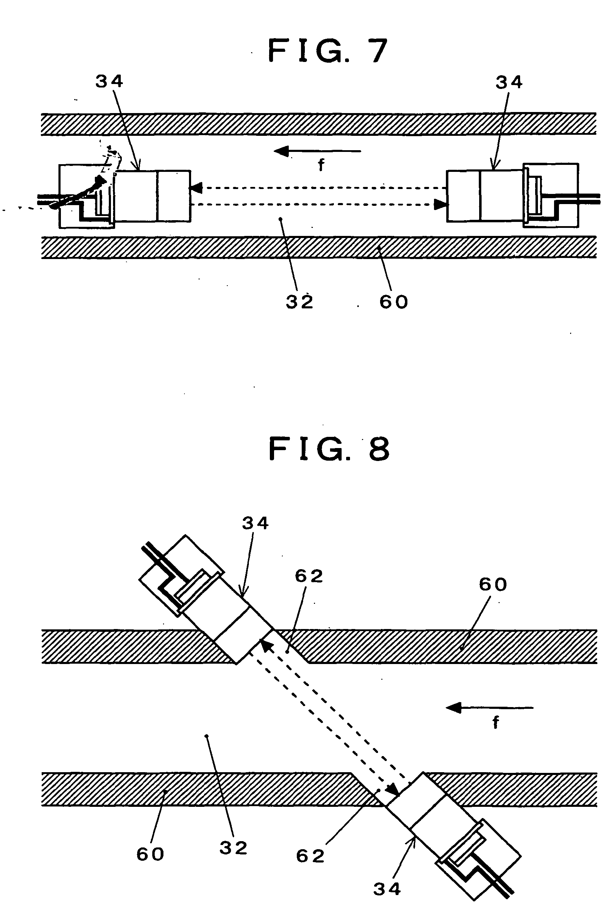

FIG. 7 illustrates an example of application of the present invention to a flow velocity measurement system for lead-bismuth. Liquid metal lead-bismuth 32 exists in a structural member 60 such as a pipe or the like, in which a pair of ultrasonic transducers 34 are disposed so as to face each other. When ultrasonic waves are sent and received in the same direction as a flowing direction (indicated by an arrow "f") of the lead-bismuth, the transmission time is faster than the transmission time obtained from a sound velocity in the stationary lead-bismuth just by the time due to the flow velocity of the lead-bismuth. On the other hand, when ultrasonic waves are sent and received in the opposite direction, the transmission time is slower than the transmission time obtained from a sound velocity in the stationary lead-bismuth just by the time due to the flow velocity of the lead-bismuth. Accordingly, by measuring these transmission times and obtaining a difference therebetween, the flow velocity of the lead-bismuth can be obtained.

FIG. 8 illustrates an example of application of the present invention to a flow velocity measurement system for lead-bismuth. Through holes 62 are formed in a wall surface of a structural member 60 such as a pipe or the like. The through holes 62 are formed so as to face each other in a diagonal direction with respect to the structural member 60, and an ultrasonic transducer 34 is placed into each of the through holes 62. Liquid metal lead-bismuth 32 is flowing in the structural member 60. When ultrasonic waves are sent and received along the flowing direction (indicated by an arrow "f") of the lead-bismuth 32, the transmission time is faster than the transmission time obtained from a sound velocity in the stationary lead-bismuth just by the time in dependence on the flow velocity of the lead-bismuth. On the other hand, when ultrasonic waves are sent and received against the flowing direction (indicated by the arrow "f") of the lead-bismuth 32, the transmission time is slower than the transmission time obtained from a sound velocity in the stationary lead-bismuth just by the time in dependence of the flow velocity of the lead-bismuth. Accordingly, by measuring these transmission times and obtaining a difference therebetween, the flow velocity of the lead-bismuth can be obtained.

In examples shown in FIGS. 5 to 8, though the ultrasonic transducer having a structure illustrated in FIG. 2A is employed, the ultrasonic transducer having such a structure as illustrated in FIG. 1 may be employed. Since the ultrasonic transducer according to the present invention improves the transmission efficiency of ultrasonic sound pressure, discrimination between an external disturbance and a received signal can be facilitated and improved measurement precision can be obtained.

## Claims

1. An ultrasonic transducer for liquid metal which comprises a combination of an ultrasonic oscillator and an oscillation transmission section and is capable of sending ultrasonic waves into liquid heavy metal through the oscillation transmission section and receiving ultrasonic waves transmitted in the liquid heavy metal,
**characterised in that** at least a front end wetted portion coming into contact with the liquid heavy metal of said oscillation transmission section is made of ferritic stainless steel.

2. An ultrasonic transducer for liquid metal which comprises a combination of an ultrasonic oscillator and an oscillation transmission section and is capable of sending ultrasonic waves into liquid heavy metal through the oscillation transmission section and receiving ultrasonic waves transmitted in the liquid heavy metal,
**characterised in that** at least a front end wetted portion coming into contact with the liquid heavy metal of said oscillation transmission section is made of aluminum alloy steel having an aluminum content of 70% or more or copper alloy steel having a copper content of 50% or more.

3. The ultrasonic transducer for liquid metal according to claim 1 or claim 2, **characterised in that** the whole of said oscillation transmission section is made of any of the ferritic stainless steel, the aluminum alloy steel and the copper alloy steel.

4. The ultrasonic transducer for liquid metal according to claim 1 or claim 2, **characterised in that** said oscillation transmission section comprises a combined body of a wave guide member disposed in the proximity of said ultrasonic oscillator and a wetted member disposed on the front end side coming into contact with the liquid heavy metal, and the wetted member is made of any of the ferritic stainless steel, the aluminum alloy steel and the copper alloy steel.

## Patentansprüche

1. Ultraschallwandler für Flüssigmetall, der umfasst: eine Kombination aus einem Ultraschalloszillator und einem Schwingungsübertragungsabschnitt, der fähig ist, Ultraschallwellen in flüssigem Schwermetall durch den Schwingungsübertragungsabschnitt zu senden und in dem flüssigen Schwermetall übertragene Ultraschallwellen zu empfangen,
**dadurch gekennzeichnet, dass** zumindest ein vorderer benetzter Endabschnitt, der in Kontakt mit dem flüssigen Schwermetall des Schwingungsübertragungsabschnitts kommt, aus ferritischem rostfreiem Stahl gefertigt ist.

2. Ultraschallwandler für Flüssigmetall, der umfasst: eine Kombination aus einem Ultraschalloszillator und einem Schwingungsübertragungsabschnitt, der fähig ist, Ultraschallwellen in flüssigem Schwermetall durch den Schwingungsübertragungsabschnitt zu senden und in dem flüssigen Schwermetall übertragene Ultraschallwellen zu empfangen,
**dadurch gekennzeichnet, dass** zumindest ein vorderer benetzter Endabschnitt, der in Kontakt mit dem flüssigen Schwermetall des Schwingungsübertragungsabschnitts kommt, aus ferritischem Aluminiumlegierungsstahl mit einem Aluminiumgehalt von 70% oder mehr oder einem Kupferlegierungsstahl mit einem Kupfergehalt von 50% oder mehr gefertigt ist.

3. Ultraschallwandler für Flüssigmetall gemäß Anspruch 1 oder 2, **dadurch gekennzeichnet**, das der gesamte Schwingungsübertragungsabschnitt beliebig aus dem ferritischen rostfreiem Stahl, dem Aluminiumlegierungsstahl oder dem Kupferlegierungsstahl gefertigt ist.

4. Ultraschallwandler für Flüssigmetall gemäß Anspruch 1 oder Anspruch 2, **dadurch gekennzeichnet, dass** der Schwingungsübertragungsabschnitt einen kombinierten Körper aus einem Wellenleiterglied, das in nächster Nähe des Ultraschalloszillators angeordnet ist, und einem benetzten Glied, das auf der vorderen Endseite, die mit dem flüssigen Schwermetall in Berührung kommt, angeordnet ist, wobei das benetzte Glied beliebig aus dem ferritischem rostfreiem Stahl, dem Aluminiumlegierungsstahl oder dem Kupferlegierungsstahl gefertigt ist.

## Revendications

1. Transducteur à ultrasons pour métal liquide, qui comprend une combinaison d'un oscillateur à ultrasons et une section de transmission d'oscillations et est capable d'envoyer des ondes à ultrasons dans un métal lourd liquide par la section de transmission d'oscillations et de recevoir des ondes à ultrasons transmises dans le métal lourd liquide,
**Caractérisé en ce que** au moins une portion mouillée d'extrémité avant venant en contact avec le métal lourd liquide de ladite section de transmission d'oscillations est réalisée en acier ferritique inoxydable.

2. Transducteur à ultrasons pour métal liquide, qui comprend une combinaison d'un oscillateur à ultrasons et une section de transmission d'oscillations et est capable d'envoyer des ondes à ultrasons dans un métal lourd liquide par la section de transmission d'oscillations et de recevoir des ondes à ultrasons transmises dans le métal lourd liquide,
**Caractérisé en ce que** au moins une portion mouillée d'extrémité avant venant en contact avec le métal lourd liquide de ladite section de transmission d'oscillations est réalisée en acier à alliage d'aluminium ayant une teneur en aluminium de 70 % ou davantage, ou en acier à alliage de cuivre ayant une teneur en cuivre de 50 % ou davantage.

3. Transducteur à ultrasons pour métal liquide selon la revendication 1 ou la revendication 2, **caractérisé en ce que** la totalité de ladite section de transmission d'oscillations est réalisée à partir de l'un quelconque de l'acier ferritique inoxydable, de l'acier à alliage d'aluminium et de l'acier à alliage de cuivre.

4. Transducteur à ultrasons pour métal liquide selon la revendication 1 ou la revendication 2, **caractérisé en ce que** ladite section de transmission d'oscillations comprend un corps combiné d'un élément de guide d'onde disposé à proximité dudit oscillateur à ultrasons et un élément mouillé disposé sur le côté d'extrémité avant venant en contact avec le métal lourd liquide, et l'élément mouillé est réalisé à partir de l'un quelconque parmi l'acier ferritique inoxydable, l'acier à alliage d'aluminium et l'acier à alliage de cuivre.
